(19) Europäisches Patentamt / European Patent Office / Office européen des brevets

(11) **EP 4 517 377 A1**

(12) **EUROPEAN PATENT APPLICATION**

(43) Date of publication:
**05.03.2025 Bulletin 2025/10**

(21) Application number: **23194487.7**

(22) Date of filing: **31.08.2023**

(51) International Patent Classification (IPC):
*G01S 13/00* (2006.01)  *G01S 13/04* (2006.01)
*G01S 7/00* (2006.01)  *G01S 13/87* (2006.01)
*G01S 7/40* (2006.01)  *H04B 17/00* (2015.01)

(52) Cooperative Patent Classification (CPC):
**G01S 13/003; G01S 7/006; G01S 7/4004;
G01S 13/04; G01S 13/87; H04B 17/27;
H04B 17/347; H04B 17/3911**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Imec VZW
3001 Leuven (BE)**
• **Universiteit Antwerpen
2000 Antwerpen (BE)**

(72) Inventors:
• **KAYA, Abdil
2000 Antwerp (BE)**
• **BERKVENS, Rafael
2000 Antwerp (BE)**
• **WEYN, Maarten
2000 Antwerp (BE)**

(74) Representative: **IP HILLS NV
Bellevue 5/501
9050 Gent-Ledeberg (BE)**

(54) **CALIBRATING A CROWD COUNTING SYSTEM**

(57) Example embodiments relate to a computer-implemented method for determining a slope (216) of a linear relationship between a crowd size (174) and a mean attenuation (175) of signals exchanged between transceivers (111 - 117) of a first crowd counting system based on parameters of a second crowd counting system; wherein respective positions of the transceivers of a crowd counting system define an environment (105) monitored by the crowd counting system. The computer-implemented method comprising: determining (201) a first mean overlapping distance (211) for the first crowd counting system, and a second mean overlapping distance (212) for the second crowd counting system; obtaining (202) a first path loss model (213) for the first crowd counting system, and a second path loss model (214) for the second crowd counting system; obtaining (203) a slope of the second crowd counting system as a reference slope (216); and determining (204) the slope (216) of the first crowd counting system as proportional to the reference slope (215), to a ratio (217) of the first mean overlapping distance to the second mean overlapping distance, and to a ratio (218) of the first path loss model to the second path loss model.

Fig. 2

EP 4 517 377 A1

**Description**

**Field of the Invention**

The present invention generally relates to radio-frequency crowd counting, in particular to the calibration or initialization of a radio-frequency crowd counting system.

**Background of the Invention**

Crowd counting refers to estimating the number of people in a monitored environment, i.e. determining a crowd size within a space. Radio-frequency crowd counting systems leverage the impact of a crowd on radio frequency signals exchanged in a wireless sensor network to determine the crowd size.

Such systems typically require initialization or calibration to determine the relationship between the crowd size and the signal strength or attenuation of respective radio frequency signals transmitted within the network. This typically includes measuring the signal strength or attenuation of the respective radio frequency signals in absence of a crowd, i.e. when the monitored environment is free of people, and in the presence of at least one known crowd size, i.e. when a known number of people are present in the monitored environment.

It is a problem that the initialization or calibration has to be repeated for each new monitored environment or when the monitored environment changes substantially, e.g. by rearranging the layout or decor within the monitored environment. It is a further problem that the crowd size has to be determined by an additional crowd counting system during the calibration measurements, e.g. by manual crowd counting, entrance gates, a camera-based crowd counting system, or interception of cell phone signals. This can be particularly challenging for large events where in- and outflow of people is irregular in time and space. It is a further problem that obtaining calibration measurements delays the startup of the crowd counting system, i.e. the start of inferring real-time crowd size estimations.

**Summary of the Invention**

It is an object of the present invention, amongst others, to solve or alleviate the above identified problems and challenges by initializing or calibrating a radio-frequency crowd counting system without performing calibration measurements with people present in the monitored environment.

According to a first aspect, this object is achieved by a computer-implemented method for determining a slope of a linear relationship between a crowd size and a mean attenuation of signals exchanged between transceivers of a first crowd counting system based on parameters of a second crowd counting system, wherein respective positions of the transceivers of a crowd counting system define an environment monitored by the crowd counting system. The computer-implemented method comprising:

- determining a first mean overlapping distance for the first crowd counting system, and a second mean overlapping distance for the second crowd counting system; wherein a mean overlapping distance is indicative for the mean length of path portions between pairs of transceivers of a crowd counting system that overlap with a region of interest defined within the environment monitored by the crowd counting system;
- obtaining a first path loss model for the first crowd counting system, and a second path loss model for the second crowd counting system; wherein a path loss model is indicative for the attenuation of a signal that propagates through the environment monitored by a crowd counting system;
- obtaining a slope of the second crowd counting system as a reference slope; and
- determining the slope of the first crowd counting system as proportional to the reference slope, to a ratio of the first mean overlapping distance to the second mean overlapping distance, and to a ratio of the first path loss model to the second path loss model.

The size of a crowd, i.e. the number of people, within the monitored environment is linearly related to the mean attenuation of signals exchanged between the transceivers of a crowd counting system. This linear relationship is characterized by a slope indicative for a rate of change in crowd size with respect to a change in mean attenuation of signals exchanged between the transceivers of the crowd counting system. The environment that can be monitored by a crowd counting system is defined by the respective positions of the transceivers in three-dimensional space.

The first crowd counting system is associated with a first environment for which the first crowd counting system is uncalibrated. The second crowd counting system is associated with a second environment for which the second crowd counting system has previously been calibrated. As the second crowd counting system has previously been calibrated, the slope of the linear relationship between the crowd size within the second environment and the mean attenuation of signals exchanged between transceivers of the second crowd counting system is known. The second crowd counting system and the second environment may also be referred to as the reference crowd counting system and the reference environment, respectively.

The computer-implemented method thus allows determining the slope of an uncalibrated crowd counting system, i.e. the first crowd counting system, based on parameters of a previously calibrated or reference crowd counting system, i.e. the second crowd counting system. To this end, a mean overlapping distance and a path loss model are determined for respectively the first and the second crowd counting system.

The mean overlapping distance is indicative for the mean length of path portions that overlap with a region of interest within the monitored environment. The path between a pair of transceivers is indicative of the course or direction of a signal travelling between the transceiver pair. The path between a pair of transceivers may, for example, be a straight line connecting the respective location of the transceivers.

The region of interest is a portion of the monitored environment. The region of interest may, for example, be a polygon within a two-dimensional map indicative for the monitored environment. The entire monitored environment may be defined as the region of interest. In this case, determining a mean overlapping distance can be achieved by determining the mean path length of the respective paths between the pairs of transceivers of the crowd counting system, as the entire length of each respective path between a pair of transceivers overlaps with the region of interest. A respective region of interest is defined for the first environment associated with the first crowd counting system and for the second environment associated with the second crowd counting system, i.e. the respective regions of interest may be substantially different in shape and/or size.

By obtaining the mean overlapping distance and the path loss model for the first and second crowd counting system, the slope of the first crowd counting system can be determined as proportional to the reference slope, a ratio of the first mean overlapping distance to the second mean overlapping distance, and a ratio of the first path loss model to the second path loss model.

This allows determining the slope of the first crowd counting system for monitoring a new environment without performing calibration measurements with people present within the new environment. This has the advantage that the slope of the first crowd counting system can be determined without an additional crowd counting system, as the amount of people within the new environment does not have to be determined during calibration measurements. It is a further advantage that the first crowd counting system can determine a crowd size with similar reliability and accuracy based on the determined slope compared to a slope determined based on calibration measurements. It is a further advantage that the reference environment associated with the reference crowd counting system can have substantially different characteristics than the first crowd counting system, e.g. different radio-frequency characteristics, a different size, and/or a different shape. It is a further advantage that delays in startup of the crowd counting system are limited.

According to an embodiment, the computer-implemented method may further comprise selecting one or more path portions between pairs of transceivers of a crowd counting system that overlap with the region of interest based on a ratio of the respective path portion lengths to the respective total path lengths; and wherein determining the first mean overlapping distance and/or the second mean overlapping distance is based on the selected one or more path portions.

Thus, only a number of selected paths between pairs of transceivers may be considered when determining the mean overlapping distance. In other words, some paths between pairs of transceivers may be ignored or disregarded in the determining of the mean overlapping distance. A path portion may, for example, be selected when a ratio of the overlapping path portion length to the total path length exceeds a selection threshold. This allows selecting paths between transceivers for which a signal travelling along the path is more likely to be affected by the presence of a crowd. In other words, this allows selecting paths between transceivers that have sufficient overlap with the region of interest such that the attenuation of a signal travelling along the selected paths can be associated with a crowd within the region of interest.

According to an embodiment, the computer-implemented method may further comprise defining a portion of the environment monitored by a crowd counting system where the presence of a crowd is expected as the region of interest.

The region of interest can thus represent a portion of the monitored environment where people are more likely to be present, i.e. where a high crowd concentration is more probable. An example of a region of interest may be an area close to a stage within a concert hall, an area around food vendors at a festival, or an area around exhibition booths within an exhibition hall.

According to an embodiment, obtaining a slope of the second crowd counting system as the reference slope may comprise determining the mean attenuation of signals exchanged between transceivers of the second crowd counting system in the presence of a predetermined crowd size within the environment monitored by the second crowd counting system.

The reference slope associated with the second crowd counting system may thus be obtained based on typical initialization or calibration measurements with people present within the second environment associated with the second crowd counting system. The mean attenuation may, for example, be measured when 100, 200, and 300 people are present within the monitored environment. The reference slope can then, for example, be determined by minimizing the sum of the squared differences between the measured crowd size during the calibration measurement and the crowd size predicted by the second crowd counting system according to the least squares method.

According to an embodiment, obtaining the first path loss model and/or the second path loss model may comprise determining the attenuation of signals exchanged between pairs of transceivers in absence of a crowd within the environment monitored by the crowd counting system.

The attenuation of signals exchanged between pairs of transceivers may thus be measured when no people are present in the monitored environment. The first and/or the second path loss model may be obtained based on these measurements.

According to an embodiment, obtaining the first path loss model and/or the second path loss model comprises fitting one or more path loss model parameters to the attenuation of the signals exchanged between pairs of transceivers in absence of a crowd within the environment monitored by the crowd counting system.

By fitting path loss model parameters to the attenuation of signals in absence of a crowd, the path loss models characterize the radio characteristics of the monitored environment. In other words, the path loss models are indicative for the attenuation of a signal propagating through the crowd-less environment. It is an advantage that a measurement of the attenuation of signals in absence of a crowd is typically available for previously calibrated crowd counting systems and their associated environments, i.e. for the second crowd counting system and the second environment, as this measurement is performed during typical calibration methods.

According to an embodiment, the first path loss model and/or the second path loss model may be log-distance path loss models characterized by a path loss at a reference distance and a path loss exponent.

In other words, the parameters of the path loss model that are fitted to the attenuation of signals in absence of a crowd may include the path loss at a reference distance, and a path loss exponent. The path loss at a reference distance may express an attenuation of a signal after travelling the reference distance through the monitored environment. The reference distance may, for example, be a near field distance of a transceiver antenna, a far field distance of a transceiver antenna, or another predetermined distance. The path loss exponent may be indicative for the rate at which the received signal strength decreases with increasing distance.

According to an embodiment, the ratio of the first path loss model to the second path loss model may be characterised by a ratio of the path loss at a reference distance associated with the first path loss model to the path loss at a reference distance associated with the second path loss model.

The slope of the first crowd counting system can thus be determined as proportional to the reference slope, the ratio of the first mean overlapping distance to the second mean overlapping distance, and the ratio of the path loss at a reference distance associated with the first path loss model to the path loss at a reference distance associated with the second path loss model.

According to an embodiment, the ratio of the first path loss model to the second path loss model may further be characterised by a ratio of the path loss exponent associated with the first path loss model to the path loss exponent associated with the second path loss model.

The slope of the first crowd counting system can thus be determined as proportional to the reference slope, the ratio of the first mean overlapping distance to the second mean overlapping distance, and the ratio of the path loss exponent parameter associated with the first path loss model to the path loss exponent parameter associated with the second path loss model.

According to an embodiment, determining the slope of the first crowd counting system may comprise determining the slope as the reference slope multiplied with the ratio of the first mean overlapping distance to the second mean overlapping distance, and multiplied with the ratio of the first path loss model to the second path loss model.

According to an embodiment, determining the slope of the first crowd counting system may comprise determining the slope as the reference slope multiplied with the ratio of the first mean overlapping distance to the second mean overlapping distance, multiplied with the ratio of the path loss at a reference distance associated with the first path loss model to the path loss at a reference distance associated with the second path loss model, and multiplied with the ratio of the path loss exponent parameter associated with the first path loss model to the path loss exponent parameter associated with the second path loss model.

According to an embodiment, the computer-implemented method may further comprise:

- defining one or more additional regions of interest within the environment monitored by the first crowd counting system;
- determining one or more additional mean overlapping distances for the first crowd counting system associated with the respective one or more additional regions of interest; and
- determining, for the one or more additional regions of interest, one or more additional slopes of the first crowd counting system as proportional to the reference slope, to a ratio of the additional mean overlapping distance associated with a respective additional region of interest to the second mean overlapping distance, and to a ratio of the first path loss model to the second path loss model.

A plurality of regions of interest may thus be defined within the monitored environment associated with the first crowd counting system, i.e. the region of interest and one or more additional regions of interests. A mean overlapping distance may be determined for each of these respective regions of interest. This allows determining respective slopes of the respective linear relationships between a crowd size and a mean attenuation for the respective regions of interest.

This allows determining a crowd size within the respective regions of interest within a monitored environment, e.g. within respective sections of an airport, based on the mean attenuation of signals exchanged between the transceivers. This has the advantage that the crowd counting system can be calibrated for relatively large environments with different compartmentalized subregions.

According to a second aspect, the disclosure relates to a data processing system configured to perform the computer-implemented method according to the first aspect.

According to a third aspect, the disclosure relates to a computer program comprising instructions which, when the program is executed by a computer, cause the computer to perform the computer-implemented method according to the first aspect.

According to a fourth aspect, the disclosure relates to a computer-readable medium comprising instructions which, when executed by a computer, cause the computer to perform the computer-implemented method according to the first aspect.

## Brief Description of the Drawings

Fig. 1 shows an example of a radio-frequency crowd counting system for determining the number of people, i.e. the crowd size, within a monitored environment;

Fig. 2 shows steps according to a computer-implemented method for determining a slope of a first crowd counting system based on parameters of a second crowd counting system;

Fig. 3 shows steps of the computer-implemented method for determining the slope of the first crowd counting system, according to embodiments;

Fig. 4 shows steps of the computer-implemented method for determining one or more slopes of the first crowd counting system, according to embodiments; and

Fig. 5 shows an example embodiment of a suitable computing system for performing steps according to example aspects of the disclosure.

## Detailed Description of Embodiment(s)

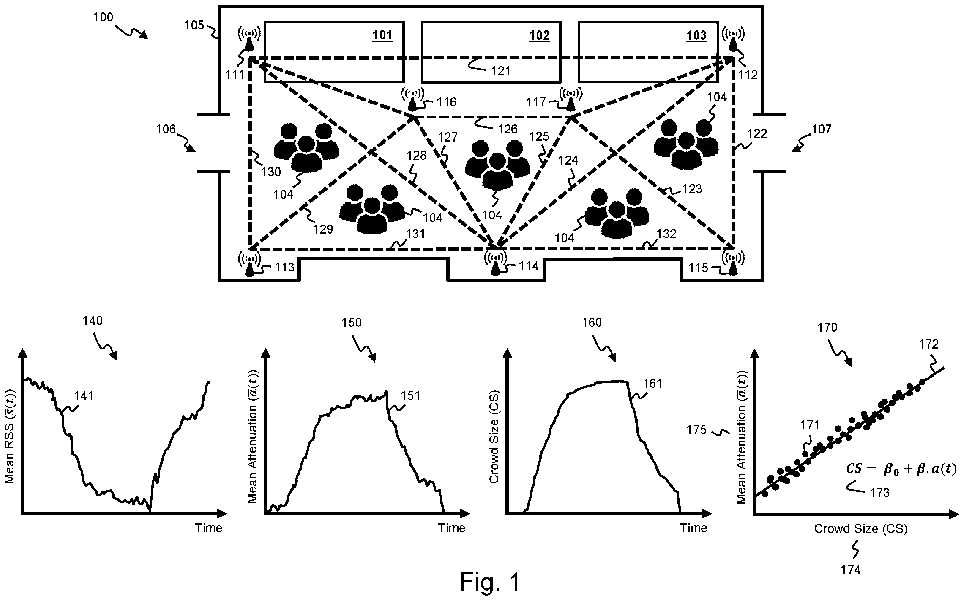

Fig. 1 shows an example 100 of a radio-frequency crowd counting system for determining the number of people 104, i.e. the crowd size, within a monitored environment 105. The monitored environment 105 may, for example, be a concert hall, a festival tent, an exhibition hall, a town square, or any other area where a substantial number of people may gather. People 104 may be able to enter and leave the monitored environment through one or more entrances/exits 106, 107.

The radio-frequency crowd counting system comprises a plurality of transceivers or nodes 111 - 117, which form a wireless network. The transceivers 111 - 117 may be positioned within a space such that the crowd size within environment 105 can be monitored. The transceivers 111 - 117 exchange signals between each other. For example, transceivers 111 - 117 may broadcast radio-frequency waves in the 868 MHz band in a turn-based fashion. The path of these exchanged signals between pairs of transceivers is illustrated in Fig. 1 by lines 121 - 130. It will be apparent that Fig. 1 shows an illustrative example with seven transceivers 111 - 117, however, a crowd counting system may comprise fewer or more transceivers. Furthermore, Fig. 1 shows only some of the paths between the pairs of transceivers 111 - 117, i.e. twelve signal paths 120 - 131. It will be apparent that more signal paths may exist between pairs of the transceivers 111 - 117 that are not illustrated in Fig. 1, e.g. a path between transceiver 112 and 116, or between transceiver 113 and 117.

Fig. 1 further shows an example 140 of the mean received signal strength $\overline{s}(t)$ 141 in time, an example 150 of the mean attenuation $\overline{a}(t)$ 151 in time, and an example 160 of the crowd size 161 within the environment 105 in time. The mean attenuation $\overline{a}(t)$ 151 may be indicative for the mean difference in received signal strength $s(t)$ between pairs of transceivers 111 - 117 $(n_i, n_j)$ relative to the received signal strength c in the absence of a crowd within the monitored environment 105:

$$\overline{a}(t) = \frac{1}{L}\sum_{(n_i,n_j)\epsilon l} a_{ij}(t) \qquad\qquad (Eq.\ 1)$$

$$a(t) = c - s(t) \qquad\qquad (Eq.\ 2)$$

wherein $L$ represents the total number of paths between transceivers; $l$ represents a set of all transceiver pairs; and $a_{ij}(t)$ represents the attenuation between a pair of transceivers $(n_i,n_j)$.

As the crowd size 161 increases, the mean received signal strength 141 decreases because the crowd 104 provides an increased obstruction for the propagation of the radio signals compared to an empty environment 105. In other words, the size of the crowd 104 will have an impact on the radio-frequency signals exchanged between the transceivers 111 - 117. As a result, the mean attenuation 151 of the transmitted signals increases with an increase in the size of the crowd 161.

Fig. 1 further shows an example 170 of a typical relationship between the mean attenuation 175 of signals exchanged between the transceivers 111 - 117 of a crowd counting system and the crowd size 174 within the monitored environment 105. Typically, this is a linear relationship 173 characterized by a slope $\beta$ indicative for a rate of change in crowd size 174 with respect to a change in mean attenuation 175 of signals exchanged between the transceivers 111 - 117 of the crowd counting system.

This linear relationship 173, and thus the slope $\beta$, typically depend on the monitored environment 105 and the setup of the crowd counting system, e.g. the orientation of the transceiver antennas, the position of the transceivers 111 - 117, the distance between transceivers 111 - 117, the shape of the monitored environment 105, and obstacles 101 - 103 within the monitored environment 105. As such, radio frequency crowd counting systems typically require initialization or calibration to determine relationship 173, i.e. to determine slope $\beta$ and intercept $\beta_0$, before being able to monitor a crowd size in a new environment. This typically includes measuring the mean attenuation of the signals exchanged between the transceivers 111 - 117 in absence of a crowd 104, i.e. when the monitored environment 105 is free of people 104; and in the presence of at least one known crowd size, i.e. when a known number of people 104 are present in the monitored environment 105. This results in a set of calibration measurements 171 to which the linear relationship 173 can be fitted 172, e.g. based on the least squares method. It will be apparent that 'the presence of a known crowd size', 'a known number of people present within the monitored environment', or 'measurements with people present in the monitored environment' do not refer to a crowd size of zero people.

It is a problem that the initialization or calibration of a crowd counting system has to be repeated for each new monitored environment 105, e.g. when installing a crowd counting system on a new location, or when the monitored environment 105 changes substantially, e.g. by rearranging the layout or decor within a monitored environment 105. For example, removing or replacing large objects 101 - 103 that impact the attenuation of exchanged signals may require a re-calibration of a crowd counting system.

It is a further problem that the crowd size 161, 174 has to be determined by an additional crowd counting system to perform the calibration measurements. In other words, in order to obtain a calibration measurement 171 the crowd size has to be determined by means of an additional crowd counting system, e.g. by means of manual crowd counting, entrance gates, a camera-based crowd counting system, or interception of cell phone signals. This can be particularly challenging for large events where inflow and outflow of people is irregular in time and space. It is a further problem that obtaining calibration measurements delays the startup of the crowd counting system, i.e. the start of inferring real-time crowd size estimations.

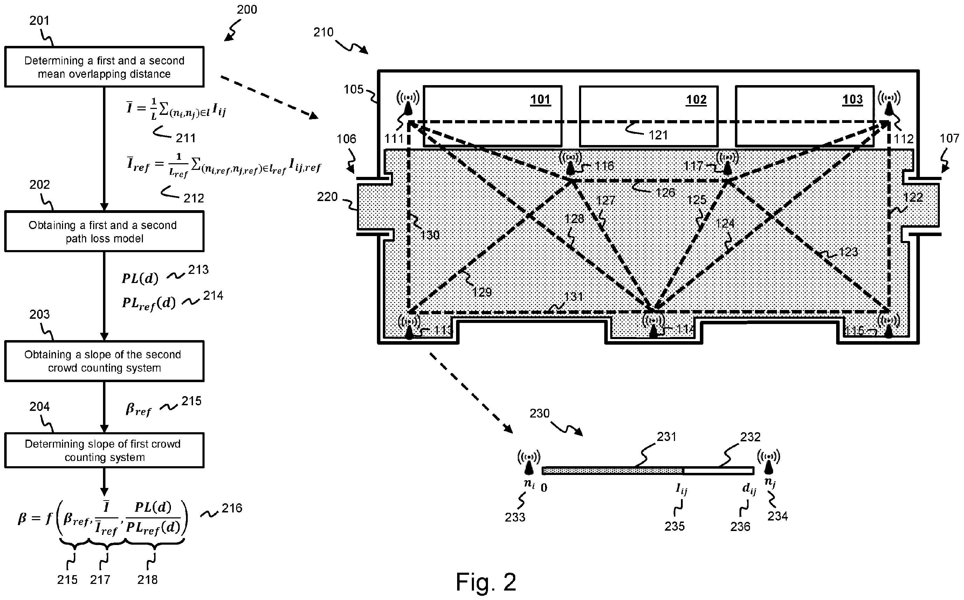

Fig. 2 shows steps 200 according to a computer-implemented method of the present disclosure that solves or alleviates the above identified problems and challenges by calibrating a crowd counting system without performing calibration measurements with people present in the monitored environment 105. This is achieved by determining the slope $\beta$ 216 of an uncalibrated crowd counting system, also referred to as the first crowd counting system 210, based on parameters of a previously calibrated crowd counting system (not shown in Fig. 2), also referred to as the second crowd counting system or the reference crowd counting system. The first crowd counting system 210 is associated with a first environment 105 for which the first crowd counting system is uncalibrated. The second crowd counting system is associated with a second environment for which the second crowd counting system has previously been calibrated. The second environment may also be referred to as the reference environment.

In a first step 201, a mean overlapping distance is determined for the first crowd counting system 210, i.e. a first mean overlapping distance $\overline{l}$ 211, and a mean overlapping distance is determined for the second crowd counting system, i.e. a second mean overlapping distance $\overline{l}_{ref}$ 212. The mean overlapping distances 211, 212 are indicative for the mean length of the path portions between pairs of transceivers 111 - 117 of the respective crowd counting systems 210 that overlap with a respective region of interest 220 defined within the environment 105 monitored by the respective crowd counting systems. Thus, a respective region of interest 220 is defined for the first environment associated with the first crowd counting system and for the second environment associated with the second crowd counting system. The respective regions of interest 220 may be substantially different in shape and/or size.

A region of interest 220 is a portion of the monitored environment 105. The region of interest 220 may, for example, be a polygon located within a two-dimensional map indicative for the monitored environment as illustrated in Fig. 2. The region of interest 220 may represent a portion of the monitored environment 105 where people are more likely to be present, i.e. where a high crowd concentration is more probable or expected. An example of a region of interest 220 may be an area close to a stage within a concert hall, an area around food vendors at a festival, or an area around exhibition booths within an exhibition hall. Alternatively, the entire monitored environment 105 may be defined as the region of interest 220.

Fig. 2 further shows an example 230 of a pair of transceivers 233, 234 including transceiver $n_i$ 233 and transceiver $n_j$ 234. The path between transceiver 233 and 234 comprises a path portion 231 that overlaps with a region of interest 220 and a path portion 232 that does not overlap with a region of interest 220. The overlapping path portion 231 has a length $l_{ij}$ 235. The total length of the path is expressed as $d_{ij}$ 236. Transceivers 233, 234 may, for example, correspond to the pair of transceivers 113, 111 in the first crowd counting system 210, respectively.

Determining the first and second mean overlapping distance 211, 212 in step 201 is then achieved by determining the mean of the length 235 of the respective overlapping path portions 231 between each pair of transceivers 111 - 117 within the first and second crowd counting system, respectively. This can be expressed for the first crowd counting system as

$$\bar{l} = \frac{1}{L}\sum\nolimits_{(n_i,n_j)\in l} l_{ij} \qquad\qquad (Eq.\ 3)$$

wherein $L$ expresses the total number of paths between transceivers within the first crowd counting system; $l$ represents the set of transceiver pairs $(n_i,n_j)$ within the first crowd counting system; and $l_{ij}$ represents the length of the overlapping path portion 231 between a transceiver pair 233, 234. This can be expressed for the second crowd counting system as

$$\bar{l}_{ref} = \frac{1}{L_{ref}}\sum\nolimits_{(n_{i,ref},n_{j,ref})\in l_{ref}} l_{ij,ref} \qquad\qquad (Eq.\ 4)$$

wherein $L_{ref}$ expresses the total number of paths between transceivers within the second crowd counting system; $l_{ref}$ represents the set of transceiver pairs $(n_{i,ref}, n_{j,ref})$ within the second crowd counting system; and $l_{ij,ref}$ represents the length of the overlapping path portion 231 between a transceiver pair 233, 234.

If the region of interest 220 of a crowd counting system is defined as the entire monitored environment 105, i.e. if the region of interest 220 covers the entire monitored environment 105, determining a mean overlapping distance in step 201 is achieved by determining the mean of the total path lengths 236 of the respective paths between the pairs of transceivers 111 - 117 of the crowd counting system, as the entire length of each respective path between a pair of transceivers overlaps with the region of interest in this case. In this case, Eq. 3 and Eq. 4 respectively become

$$\bar{l} = \frac{1}{L}\sum\nolimits_{(n_i,n_j)\in l} d_{ij} \qquad\qquad (Eq.5)$$

$$\bar{l}_{ref} = \frac{1}{L_{ref}}\sum\nolimits_{(n_{i,ref},n_{j,ref})\in l_{ref}} d_{ij,ref} \qquad\qquad (Eq.\ 6)$$

In a next step 202, a path loss model is obtained for the first crowd counting system 210, i.e. a first path loss model $PL(d)$ 213, and a path loss model is obtained for the second crowd counting system, i.e. a second path loss model $PL_{ref}(d)$ 214. The first path loss model is indicative for the attenuation of a signal that propagates through the first environment 105. The second path loss model is indicative for the attenuation of a signal that propagates through the second environment.

In a following step 203, the slope of the second crowd counting system is obtained as a reference slope $\beta_{ref}$ 215. As the second crowd counting system has previously been calibrated, the slope $\beta_{ref}$ 215 of the linear relationship between the crowd size within the second environment and the mean attenuation of signals exchanged between transceivers of the second crowd counting system is known. This slope $\beta_{ref}$ 215 may, for example, be determined based on previously performed calibration measurements when a known amount of people is present in the second environment, as discussed in relation to Fig. 1 above.

In a next step 204, the slope $\beta$ 216 of the first crowd counting system 210 is determined as proportional to the reference slope $\beta_{ref}$ 215; to a ratio $\frac{\bar{l}}{\bar{l}_{ref}}$ 217 of the first mean overlapping distance $\bar{l}$ 211 to the second mean overlapping

distance $\bar{l}_{ref}$ 212; and to a ratio $\dfrac{PL(d)}{PL_{ref}(d)}$ 218 of the first path loss model $PL(d)$ 213 to the second path loss model $PL_{ref}(d)$ 214. Slope $\beta$ may be determined as

$$\beta = \beta_{ref} \cdot \frac{PL(d)}{PL_{ref}(d)} \cdot \frac{\bar{l}}{\bar{l}_{ref}} \qquad\qquad (Eq.\ 7)$$

This allows determining the slope $\beta$ 216 of the first crowd counting system for monitoring a new environment 105 without performing calibration measurements with people present within the new environment 105. This has the advantage that the slope $\beta$ 216 of the first crowd counting system 210 can be determined without an additional crowd counting system, as the amount of people within the new environment does not have to be determined during calibration measurements. It is a further advantage that the first crowd counting system 210 can determine a crowd size with similar reliability and accuracy based on the determined slope $\beta$ 216 compared to a slope determined based on calibration measurements. It is a further advantage that the reference environment associated with the reference crowd counting system can have substantially different characteristics than the first crowd counting system, e.g. different radio-frequency characteristics, a different size, and/or a different shape. It is a further advantage that delays in startup of the crowd counting system are limited.

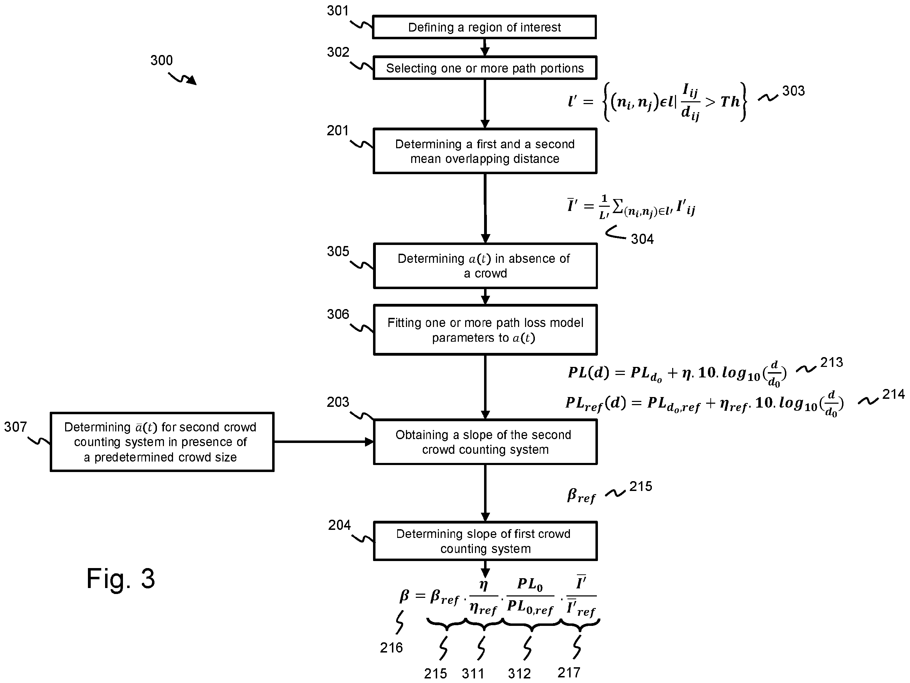

Fig. 3 shows steps 300 of the computer-implemented method for determining the slope $\beta$ 216 of the first crowd counting system, according to embodiments. In a first step 301, the region of interest may be defined. In a next step 302, one or more path portions between pairs of transceivers that overlap with the defined region of interest may be selected. A path portion may, for example, be selected when a ratio of the overlapping path portion length, e.g. $l_{ij}$ 231 in Fig. 2, to the total path length, e.g. $d_{ij}$ 236 in Fig. 2, exceeds a selection threshold $Th$. The transceiver pairs associated with the selected path portions may be collected in a set $l'$, which can be expressed for the first crowd counting system as

$$l' = \left\{ (n_i, n_j) \epsilon l | \frac{l_{ij}}{d_{ij}} > Th \right\} \qquad\qquad (Eq.\ 8)$$

wherein $l'$ 303 represents the transceiver pairs associated with the set of selected one or more path portions; $l$ represents the set of transceiver pairs $(n_i, n_j)$ within the first crowd counting system; $l_{ij}$ represents the length of the overlapping path portion between a transceiver pair; $d_{ij}$ represents the total path length between the transceiver pair; and $Th$ represents the selection threshold. The selection threshold $Th$ may, for example, be around 0.7.

The determining of the first $\bar{l}$ and the second $\bar{l}_{ref}$ mean overlapping distance in step 201 may then be limited to the transceiver pairs associated with the selected one or more path portions, i.e. limited to the set $l'$ rather than the set of all transceiver pairs $l$. This can be expressed for the first crowd counting system as

$$\bar{l}' = \frac{1}{L'} \sum_{(n_i, n_j) \in l'} l'_{ij} \qquad\qquad (Eq.\ 9)$$

wherein $l'$ 303 represents the transceiver pairs within the first crowd counting system associated with the set of selected one or more path portions; $L'$ represents the amount of transceiver pairs in set $l'$; $(n_i, n_j)$ represents a transceiver pair in set $l'$; and $l'_{ij}$ represents the length of the selected overlapping path portion. For the second crowd counting system this can be expressed as

$$\bar{l}'_{ref} = \frac{1}{L'_{ref}} \sum_{(n_{i,ref}, n_{j,ref}) \in l'_{ref}} l'_{ij,ref} \qquad\qquad (Eq.\ 10)$$

wherein $l'_{ref}$ represents the transceiver pairs within the second crowd counting system associated with the set of selected one or more path portions; $L'_{ref}$ represents the amount of transceiver pairs in set $l'_{ref}$; $(n_i, n_j)$ represents a transceiver pair in set $l'_{ref}$; and $l'_{ij,ref}$ represents the length of the selected overlapping path portion.

This allows selecting paths between transceivers for which a signal travelling along the path is more likely to be affected by the presence of a crowd. In other words, it allows filtering out paths that contribute relatively less to determining the slope $\beta$ 216 of the first crowd counting system in a reliable and accurate manner. Thus, only a number of selected paths between pairs of transceivers may be considered when determining the first mean overlapping distance and/or the second mean overlapping distance. It will be apparent that both step 301 and 302 may be performed for the first crowd counting system and the second crowd counting system, respectively. Alternatively, the selecting in step 302 may only be performed for the first crowd counting system, or only for the second crowd counting system.

Obtaining the first path loss model 213 and/or obtaining the second path loss model 214, i.e. step 202 in Fig. 2, may further comprise determining the attenuation, i.e. the path loss, of signals exchanged between pairs of transceivers in absence of a crowd within the environment monitored by the crowd counting system in step 305. In other words, the attenuation or path loss of signals exchanged between pairs of transceivers within the first crowd counting system and/or the second crowd counting system may be determined when no people are present in the first environment and/or the second environment, respectively. This can be achieved by measuring the received signal strength $c_{ij}$ of a signal exchanged between a pair of transceivers $(n_i, n_j)$ in absence of a crowd. The attenuation or path loss between a pair of transceivers $(n_i, n_j)$ can then, for example, be determined as

$$PL_{ij} = P_i + G_i + G_j - c_{ij} \qquad\qquad (Eq.\ 11)$$

wherein $PL_{ij}$ represents the path loss or attenuation; $P_i$ represents the transmission power of the signal by transceiver $n_i$; $G_i$ represents the transmitter antenna gain of transceiver $n_i$; $G_j$ represents the receiver antenna gain of transceiver $n_j$; and $c_{ij}$ represents the received signal strength in absence of a crowd within the environment monitored by the crowd counting system.

The first path loss model 213 and/or the second path loss model 214 may then be obtained based on the determined attenuation or path loss $PL_{ij}$ for one or more pairs of transceivers within the crowd counting system, which can be represented as a vector $\mathcal{L}$. This can be achieved by fitting one or more path loss model parameters to the attenuation or path loss of the signals $\mathcal{L}$ in absence of a crowd within the monitored environment in step 306. In other words, in step 306, path loss model parameters are fitted to the measurements obtained in step 305.

By fitting path loss model parameters to the attenuation or path loss of signals $\mathcal{L}$ in absence of a crowd, the path loss models 213, 214 characterize the radio characteristics of the monitored environment. In other words, the path loss models 213, 214 are indicative for the attenuation or path loss of a signal propagating through a crowd-less environment. It is an advantage that a measurement of the attenuation of signals or a measurement of the received signal strength in absence of a crowd is typically available for previously calibrated crowd counting systems and their associated environments, i.e. for the second crowd counting system and the second environment, as this measurement is performed during typical existing calibration methods for radio-frequency crowd counting systems.

The path loss models 213, 214 may be log-distance path loss models characterized by a first path loss model parameter and a second path loss model parameter. The first path loss model parameter may be a path loss at a reference distance, i.e. $PL_{d0}$ for the first path loss model 213 and $PL_{d0,ref}$ for the second path loss model 214. The path loss at a reference distance $PL_{d0}$ or $PL_{d0,ref}$ may express an attenuation of a signal after travelling the reference distance $d_0$ through the first environment or the second environment, respectively. The reference distance $d_0$ may, for example, be a near field distance of a transceiver antenna, a far field distance of a transceiver antenna, or another predetermined distance. The reference distance $d_0$ for the first crowd counting system may further be different compared to the reference distance $d_0$ for the second crowd counting system.

The second path loss model parameter may be a path loss exponent, i.e. $\eta$ for the first path loss model 213 and $\eta_{ref}$ for the second path loss model 214. The path loss exponent may be indicative for the rate at which the received signal strength decreases with increasing distance. As such, the first path loss model $PL(d)$ 213 and the second path loss model $PL_{ref}(d)$ 214 may be defined as

$$PL(d) = PL_{d_o} + \eta.10.log_{10}\left(\frac{d}{d_0}\right) \qquad\qquad (Eq.\ 12)$$

$$PL_{ref}(d) = PL_{d_o,ref} + \eta_{ref}.10.log_{10}\left(\frac{d}{d_0}\right) \qquad\qquad (Eq.\ 13)$$

The next step 203 of obtaining the slope of the second crowd counting system as the reference slope $\beta_{ref}$ 215 may comprise determining the mean attenuation of signals $\bar{a}(t)$ exchanged between transceivers of the second crowd counting system in the presence of a predetermined crowd size within the second environment in step 307. The reference slope $\beta_{ref}$ 215 associated with the second crowd counting system may thus be obtained based on typical initialization or calibration measurements with people present within the second environment. The mean attenuation $\bar{a}(t)$ may, for example, be measured when 100, 200, and 300 people are present within the second environment. The reference slope $\beta_{ref}$ 215 can then, for example, be determined by minimizing the sum of the squared differences between the measured crowd size during the calibration measurement and the crowd size predicted by the second crowd counting system according to the least squares method.

In a final step 204, the slope $\beta$ 216 of the first crowd counting system may be determined based on a proportionality between the reference slope $\beta_{ref}$ 215; the ratio $\dfrac{\overline{l'}}{\overline{l'}_{ref}}$ 217; and the ratio $\dfrac{PL(d)}{PL_{ref}(d)}$. Ratio $\dfrac{PL(d)}{PL_{ref}(d)}$ may be characterised by a ratio $\dfrac{PL_0}{PL_{0,ref}}$ 312 of the path loss at a reference distance $PL_0$ associated with the first path loss model 213 to the path loss at a reference distance $PL_{0,ref}$ associated with the second path loss model 214.

Ratio $\dfrac{PL(d)}{PL_{ref}(d)}$ may further be characterised by a ratio $\dfrac{\eta}{\eta_{ref}}$ 311 of the path loss exponent $\eta$ associated with the first path loss model 213 to the path loss exponent $\eta_{ref}$ associated with the second path loss model 214. As such, the slope $\beta$ 216 of the first crowd counting system may be determined as

$$\boldsymbol{\beta} = \boldsymbol{\beta_{ref}} \cdot \frac{\eta}{\eta_{ref}} \cdot \frac{PL_0}{PL_{0,ref}} \cdot \frac{\overline{l'}}{\overline{l'}_{ref}} \qquad\qquad (Eq.\ 14)$$

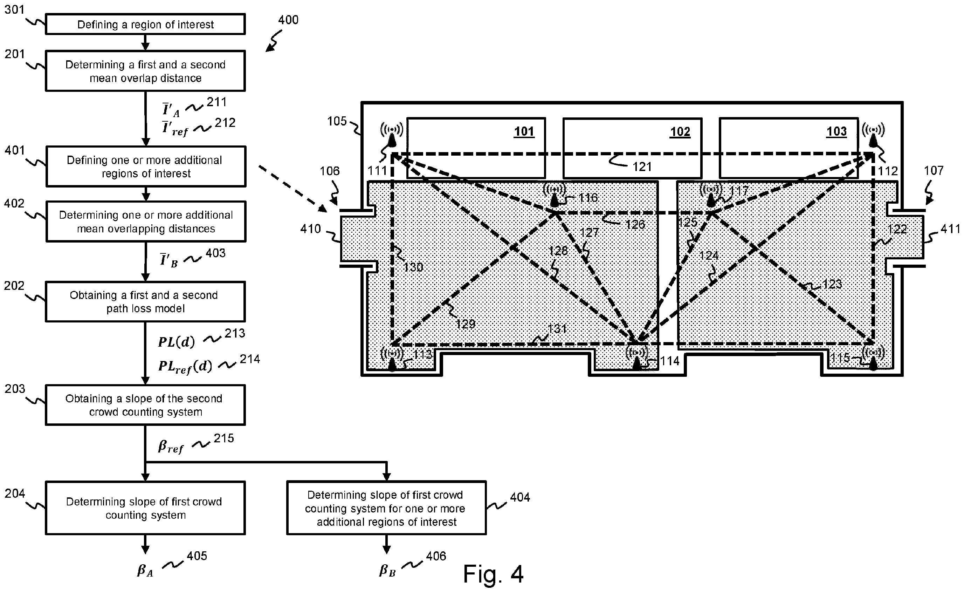

Fig. 4 shows steps 400 of the computer-implemented method for determining one or more slopes $\beta_A$ 405, $\beta_B$ 406 of the first crowd counting system, according to embodiments. To this end, a region of interest 410 may be defined within the monitored environment 105 in step 301. In a following step 201, a first mean overlapping distance $\overline{l}_A$ 211 associated with region of interest 410 may be determined, i.e. as described above in relation to Fig. 2 or Fig. 3. Also in step 201, the second mean overlapping distance $\overline{l'}_{ref}$ 212 associated with the region of interest of the second environment may be determined.

In step 401, one or more additional regions of interest 411 within the monitored environment 105 may be defined, i.e. in addition to region of interest 410. The one or more additional regions of interest 411 may each cover a portion of the monitored environment 105. The one or more additional regions of interest 411 may partially overlap. In a next step 402, a mean overlapping distance $\overline{l}_B$ 403 may be determined for each of the respective additional regions of interest 411.

After obtaining the first path loss model $PL(d)$ 213, the second path loss model $PL_{ref}(d)$, and the reference slope $\beta_{ref}$ 215; a respective slope $\beta_A$ 405, $\beta_B$ 406 may be determined associated with the region of interest 410 and the additional regions of interest 411. The respective slopes $\beta_A$ 405, $\beta_B$ 406 may be determined according to a proportionality described above in relation to Fig. 2 or Fig. 3, e.g. according to Eq. 5 or Eq. 12.

In doing so, respective slopes $\beta_A$ 405, $\beta_B$ 406 of the respective linear relationships between a crowd size and a mean attenuation for the respective regions of interest 410, 411 can be determined. This allows determining a crowd size within the respective regions of interest 410, 411 within a monitored environment 105, e.g. within respective sections of an airport, based on the mean attenuation of signals exchanged between the transceivers 111 - 117. This has the advantage that the crowd counting system can be calibrated for relatively large environments with different compartmentalized subregions.

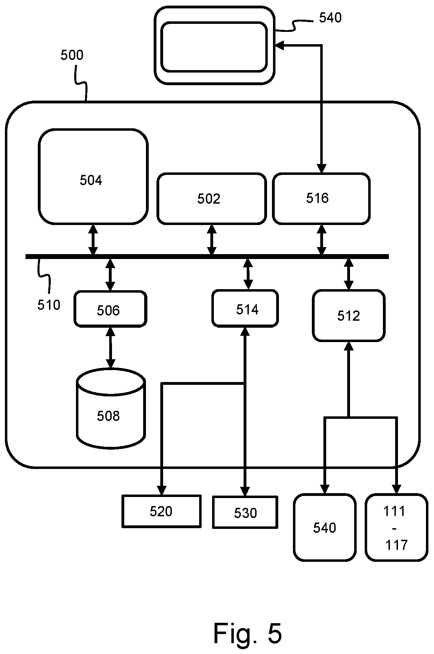

Fig. 5 shows a suitable computing system 500 enabling to implement embodiments of the above described computer-implemented method. Computing system 500 may in general be formed as a suitable general-purpose computer and comprise a bus 510, a processor 502, a local memory 504, one or more optional input interfaces 514, one or more optional output interfaces 516, a communication interface 512, a storage element interface 506, and one or more storage elements 508. Bus 510 may comprise one or more conductors that permit communication among the components of the computing system 500. Processor 502 may include any type of conventional processor or microprocessor that interprets and executes programming instructions. Local memory 504 may include a random-access memory (RAM) or another type of dynamic storage device that stores information and instructions for execution by processor 502 and/or a read only memory (ROM) or another type of static storage device that stores static information and instructions for use by processor 502. Input interface 514 may comprise one or more conventional mechanisms that permit an operator or user to input information to the computing device 500, such as a keyboard 520, a mouse 530, a pen, voice recognition and/or biometric mechanisms, a camera, etc. Output interface 516 may comprise one or more conventional mechanisms that output information to the operator or user, such as a display 540, etc. Communication interface 512 may comprise any transceiver-like mechanism such as for example one or more Ethernet interfaces that enables computing system 500 to communicate with other devices and/or systems such as for example, amongst others, a database 540 including calibration measurements of the second crowd counting system, and transceivers 111 - 117. The communication interface 512 of computing system 500 may be connected to such another computing system by means of a local area network (LAN) or a wide area network (WAN) such as for example the internet. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example SATA disk drives, and control the reading and writing of data to and/or from these storage elements 508. Although the storage element(s) 508 above is/are described as a local disk, in general any other suitable computer-readable media such as a removable magnetic disk, optical storage media such as a CD or DVD, -ROM disk, solid state drives, flash memory cards, etc. could be used.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A computer-implemented method for determining a slope (216) of a linear relationship (172) between a crowd size (174) and a mean attenuation (175) of signals exchanged between transceivers (111 - 117) of a first crowd counting system based on parameters of a second crowd counting system; wherein respective positions of the transceivers of a crowd counting system define an environment (105) monitored by the crowd counting system; the computer-implemented method comprising:

   - determining (201) a first mean overlapping distance (211) for the first crowd counting system, and a second mean overlapping distance (212) for the second crowd counting system; wherein a mean overlapping distance is indicative for the mean length of path portions (231) between pairs of transceivers (233, 234) of a crowd counting system that overlap with a region of interest (220) defined within the environment (105) monitored by the crowd counting system;
   - obtaining (202) a first path loss model (213) for the first crowd counting system, and a second path loss model (214) for the second crowd counting system; wherein a path loss model is indicative for the attenuation of a signal that propagates through the environment monitored by a crowd counting system;
   - obtaining (203) a slope of the second crowd counting system as a reference slope (216); and
   - determining (204) the slope (216) of the first crowd counting system as proportional to the reference slope (215), to a ratio (217) of the first mean overlapping distance to the second mean overlapping distance, and to a ratio (218) of the first path loss model to the second path loss model.

2. The computer-implemented method according to claim 1, further comprising selecting (302) one or more path portions between pairs of transceivers (233, 234) of a crowd counting system that overlap with the region of interest based on a ratio of the respective path portion lengths (235) to the respective total path lengths (236); and wherein determining (201) the first mean overlapping distance and/or the second mean overlapping distance is based on the selected one or more path portions (303).

3. The computer-implemented method according to any of the preceding claims, further comprising defining (301) a portion of the environment (105) monitored by a crowd counting system where the presence of a crowd is expected as the region of interest (220).

4. The computer-implemented method according to any of the preceding claims, wherein obtaining (203) a slope of the second crowd counting system as the reference slope comprises determining (307) the mean attenuation of signals exchanged between transceivers of the second crowd counting system in the presence of a predetermined crowd size within the environment monitored by the second crowd counting system.

5. The computer-implemented method according to any of the preceding claims, wherein obtaining (202) the first path loss model (213) and/or the second path loss model (214) comprises determining (305) the attenuation of signals exchanged between pairs of transceivers in absence of a crowd within the environment monitored by the crowd counting system.

6. The computer-implemented method according to claim 5, wherein obtaining (202) the first path loss model (213) and/or the second path loss model (214) comprises fitting (306) one or more path loss model parameters to the attenuation of the signals exchanged between pairs of transceivers in absence of a crowd within the environment monitored by the crowd counting system.

7. The computer-implemented method according to claim 6, wherein the first path loss model (213) and/or the second path loss model (214) are log-distance path loss models **characterized by** a path loss at a reference distance and a path loss exponent.

8. The computer-implemented method according to claim 7, wherein the ratio (218) of the first path loss model to the second path loss model is **characterised by** a ratio (312) of the path loss at a reference distance associated with the first path loss model to the path loss at a reference distance associated with the second path loss model.

9. The computer-implemented method according to claim 7 or 8, wherein the ratio (218) of the first path loss model to the second path loss model is further **characterised by** a ratio (311) of the path loss exponent associated with the first path loss model to the path loss exponent associated with the second path loss model.

10. The computer-implemented method according to any of the preceding claims, wherein determining (204) the slope (216) of the first crowd counting system comprises determining the slope (216) as the reference slope (215) multiplied with the ratio (217) of the first mean overlapping distance to the second mean overlapping distance, and multiplied with the ratio (218) of the first path loss model to the second path loss model.

11. The computer-implemented method according to claims 8 - 10, wherein determining (204) the slope (216) of the first crowd counting system comprises determining the slope (216) as the reference slope (215) multiplied with the ratio (217) of the first mean overlapping distance to the second mean overlapping distance, multiplied with the ratio (312) of the path loss at a reference distance associated with the first path loss model to the path loss at a reference distance associated with the second path loss model, and multiplied with the ratio (311) of the path loss exponent parameter associated with the first path loss model to the path loss exponent parameter associated with the second path loss model.

12. The computer-implemented method according to any of the preceding claims, further comprising:

   - defining (401) one or more additional regions of interest (411) within the environment (105) monitored by the first crowd counting system;
   - determining (402) one or more additional mean overlapping distances (403) for the first crowd counting system associated with the respective one or more additional regions of interest; and
   - determining (404), for the one or more additional regions of interest, one or more additional slopes (405) of the first crowd counting system as proportional to the reference slope (215), to a ratio of the additional mean overlapping distance associated with a respective additional region of interest (411) to the second mean overlapping distance (212), and to a ratio of the first path loss model (213) to the second path loss model (214).

13. A data processing system configured to perform the computer-implemented method according to any one of claims 1 to 12.

14. A computer program comprising instructions which, when the program is executed by a computer, cause the computer to perform the computer-implemented method according to any one of claims 1 to 12.

15. A computer-readable medium comprising instructions which, when executed by a computer, cause the computer to perform the computer-implemented method according to any one of claims 1 to 12.

Fig. 1

201

Determining a first and a second mean overlapping distance

$$\bar{I} = \frac{1}{L}\sum_{(n_i,n_j)\in l} I_{ij}$$

211

$$\bar{I}_{ref} = \frac{1}{L_{ref}}\sum_{(n_{i,ref},n_{j,ref})\in l_{ref}} I_{ij,ref}$$

212

202

Obtaining a first and a second path loss model

$PL(d)$ ~ 213

$PL_{ref}(d)$ ~ 214

203

Obtaining a slope of the second crowd counting system

$\beta_{ref}$ ~ 215

204

Determining slope of first crowd counting system

$$\beta = f\left(\beta_{ref}, \frac{\bar{I}}{\bar{I}_{ref}}, \frac{PL(d)}{PL_{ref}(d)}\right)$$ ~ 216

215  217  218

200

210

105

106

107

220

**101**  **102**  **103**

111  121  112  122

116  117  126  125  127  128  124  123

130  129  131  123

111  114  115

230

231  232

$n_i$ 0  $l_{ij}$  $d_{ij}$  $n_j$

233  235  236  234

Fig. 2

**301** Defining a region of interest

**302** Selecting one or more path portions

$$l' = \left\{ (n_i, n_j) \epsilon l \mid \frac{I_{ij}}{d_{ij}} > Th \right\} \quad \sim 303$$

**201** Determining a first and a second mean overlapping distance

$$\bar{I}' = \frac{1}{L'} \sum_{(n_i, n_j) \in l'} I'_{ij}$$

$\sim 304$

**305** Determining $a(t)$ in absence of a crowd

**306** Fitting one or more path loss model parameters to $a(t)$

$$PL(d) = PL_{d_o} + \eta. \, 10. \, log_{10}\left(\frac{d}{d_0}\right) \quad \sim 213$$

$$PL_{ref}(d) = PL_{d_o,ref} + \eta_{ref}. \, 10. \, log_{10}\left(\frac{d}{d_0}\right) \quad \sim 214$$

**307** Determining $\bar{a}(t)$ for second crowd counting system in presence of a predetermined crowd size

**203** Obtaining a slope of the second crowd counting system

$\beta_{ref} \sim 215$

**204** Determining slope of first crowd counting system

$$\beta = \beta_{ref} \cdot \frac{\eta}{\eta_{ref}} \cdot \frac{PL_0}{PL_{0,ref}} \cdot \frac{\bar{I}'}{\bar{I}'_{ref}}$$

216

215  311  312  217

**Fig. 3**

300

Fig. 4

EP 4 517 377 A1

Fig. 5

Europäisches Patentamt

European Patent Office

Office européen des brevets

**EUROPEAN SEARCH REPORT**

Application Number

EP 23 19 4487

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2020/196091 A1 (JEONG JAEHOON [KR] ET AL) 18 June 2020 (2020-06-18) * figures 1, 3, 4 * | 1-15 | INV. G01S13/00 G01S13/04 G01S7/00 |
| A | SIMONE DI DOMENICO ET AL: "A Trained-once Crowd Counting Method Using Differential WiFi Channel State Information", WORKSHOP ON PHYSICAL ANALYTICS, ACM, 2 PENN PLAZA, SUITE 701 NEW YORK NY 10121-0701 USA, 26 June 2016 (2016-06-26), pages 37-42, XP058261533, DOI: 10.1145/2935651.2935657 ISBN: 978-1-4503-4328-2 * abstract * | 1-15 | G01S13/87 G01S7/40 H04B17/00 |
| A | DI DOMENICO SIMONE ET AL: "Trained-once device-free crowd counting and occupancy estimation using WiFi: A Doppler spectrum based approach", 2016 IEEE 12TH INTERNATIONAL CONFERENCE ON WIRELESS AND MOBILE COMPUTING, NETWORKING AND COMMUNICATIONS (WIMOB), IEEE, 17 October 2016 (2016-10-17), pages 1-8, XP033015456, DOI: 10.1109/WIMOB.2016.7763227 [retrieved on 2016-11-30] * abstract * | 1-15 | |

**TECHNICAL FIELDS SEARCHED (IPC)**

G01S
H04B

The present search report has been drawn up for all claims

| Place of search | Date of completion of the search | Examiner |
|---|---|---|
| Munich | 26 February 2024 | Ferrara, Michele |

EPO FORM 1503 03.82 (P04C01)

## ANNEX TO THE EUROPEAN SEARCH REPORT
## ON EUROPEAN PATENT APPLICATION NO.

EP 23 19 4487

This annex lists the patent family members relating to the patent documents cited in the above-mentioned European search report.
The members are as contained in the European Patent Office EDP file on
The European Patent Office is in no way liable for these particulars which are merely given for the purpose of information.

26-02-2024

| Patent document cited in search report | Publication date | Patent family member(s) | Publication date |
|---|---|---|---|
| US 2020196091 A1 | 18-06-2020 | KR 102120436 B1 | 08-06-2020 |
| | | US 2020196091 A1 | 18-06-2020 |

EPO FORM P0459